# EUROPEAN PATENT SPECIFICATION

(11) **EP 2 204 096 B1**
(45) Date of publication and mention of the grant of the patent: **26.10.2011**
(21) Application number: 09380198.3
(22) Date of filing: 28.12.2009
(51) Int. Cl.: A21D 8/06, A21B 2/00, H05B 6/46

(54) **Method for producing bread loaves by cooking via dielectric heating**
Verfahren zur Herstellung von Brotlaiben durch Kochen mittels dielektrischer Erwärmung
Procédé de production de pain par une cuisson via un chauffage diélectrique

(30) Priority: 30.12.2008 ES 200803738
(43) Date of publication of application: 07.07.2010
(73) Proprietor: Panrico S.L., 08130 Santa Perpetua de Mogoda (Barcelona (ES)
(72) Inventor: Nin Tárraga, Carles, 08130 Santa Perpetua de Mogoda (Barcelona) (ES); Minguez Pablos, Irene, 08130 Santa Perpetua de la Mogoda (ES)
(74) Representative: Curell Aguilà, Marcelino

(56) References cited:
- EP-A1- 0 250 159
- EP-A2- 1 116 440
- GB-A- 902 412
- GB-A- 904 371
- GB-A- 985 442
- US-A1- 2004 000 543

## Description

### Field of the invention

The invention relates to industrial bakery field, particularly to the field of producing crustless bread loaves.

More specifically, the invention relates to a method for producing bread loaves wherein the cooking is performed by dielectric heating of bread dough.

### State of the art

The methods usually used for the industrial production of crustless bread loaves are traditionally based on obtaining a bread loaf with a crust in a conventional oven, wherein the heat is transmitted by convection and thermal radiation, and then separating the crust from the bread loaf by mechanical means. Usually, the bread loaf with the crust has a parallelepiped shape. The crust is separated by making a cut on each of the six faces of the bread loaf using a blade system. Normally it is cooled at a low temperature to make it easier to cut the crust . These methods suffer from the drawback that they require a sophisticated facility. On the other hand, all the known methods based on mechanically separating the crust from a bread loaf cooked in a conventional oven necessarily imply wasting a considerable amount of raw materials, since the crust contains an important percentage of the total bread dough. Typically, the amount loss by removing the crust is over 45 per cent of the mass of bread dough.

In order to prevent or minimise the formation of the crust, various methods have been proposed that are based on cooking the bread loaves at a low temperature, around 100 °C, so as to inhibit the chemical reactions known as Maillard reactions which are responsible for the surface of the bread loaves changing colour.

Documents ES2289901A1 (BIMBO S.A.) and ES2291141A1 (PANRICO S.L.) describe low temperature cooking methods based on cooking the bread loaves in a steam environment at a temperature of around 100 °C. Although this technology makes it possible to effectively produce a bread loaf with a fine outer layer and which is substantially the same colour as the crumb of the bread, it suffers from the drawback that at the output of the cooking stage a fairly wet bread loaf is obtained, which hinders subsequent processing stages and makes it necessary to reinforce the control measures against bacterial growth.

Document ES2289900A1 (BIMBO S.A.) describes a method for cooking bread loaves at a low temperature wherein the cooking is achieved by dielectric heating of bread dough, in particular, via cooking in a microwave oven. This document describes an experimental test conducted on a laboratory scale, wherein bread loaf dough is exposed to microwave radiation in a conventional microwave oven and is then cooked conventionally to give the product consistency and facilitate the mould release, whereby a bread loaf is obtained that does not have any toasted crust. The practical application on an industrial scale of a similar microwave cooking method suffers from significant drawbacks. A first drawback consists in that, in an industrial scale microwave oven, in other words an oven that is large enough for the mass production of bread loaves, it is difficult to achieve a suitable distribution of the microwave radiation intensity inside the oven, whereby it is difficult to make the radiation affect in a homogeneous manner all the bread loaves in the oven. In a conventional microwave oven, like the one used in said document ES2289900A1, this problem is resolved by the known rotary plate on which the product to be heated is placed, and by wave stirrers with which the oven is usually equipped. However, these solutions are not directly applicable to an oven that is suitably sized to produce bread loaves on an industrial scale. Another difficulty consists in the fact that microwave radiation does not penetrate very far into the bread loaf dough, and so it is difficult to obtain an appropriate cooking point in the centre of the dough, without the peripheral areas being cooking too much. In fact, microwave radiation mainly affects the peripheral parts of the bread dough, heating them much more quickly than the centre, and so most of the heat that reaches the centre is transmitted by conduction from the peripheral parts. In this aspect, the heating mechanism for the bread dough is similar to that produced in a conventional convection and thermal radiation oven, the difference being that in the latter case, the oven temperature must be high in order to transmit enough heat to the surface of the dough, whereas in a microwave oven the heat is produced directly via dielectric heating mainly in the peripheral areas of the bread dough.

In view of the state of the art, the applicant intends, as the essential principle of this invention, to carry out a method for cooking bread loaves at a low temperature wherein the cooking is achieved by dielectric heating of bread dough using radio frequency radiation within a frequency range below the microwave spectrum. This way it is possible to considerably reduce the cited drawbacks of the microwave cooking method, that is, the difficulty of suitably distributing the microwave radiation intensity inside the oven and the low microwave radiation penetration power in bread dough. In fact, both problems are considerably reduced if the radiation frequency is reduced to below the microwave radiation spectrum.

Methods of dielectric heating via radio frequency radiation ranging from the top part of the High Frequency (HF) spectrum and the bottom part of the Very High Frequency (VHF) spectrum are known, using a narrow frequency band centred in some of the following values:
13.56 MHz
27.12 MHz
40.68 MHz
which are ISM ("Industrial, Scientific and Medical") frequency bands reserved for the non-commercial use of radio frequencies in the areas of industry, science and medicine. It is worth remembering that the microwave spectrum is in a much higher frequency range of 1 GHz to 300 GHz. In particular, microwave ovens usually work with a frequency centred on 2.45 GHz, which is also a reserved ISM frequency.

Document US6914226B2 (COMDEL Inc.) discloses a method for dielectric heating food products in a radio frequency oven that uses frequencies within the range of 3 MHz to 300 MHz, and more particularly a frequency corresponding to some of the three values of ISM reserved bands mentioned above. The food products continually pass through the radio frequency oven, transported by conveyor belts. The method is applied to cook food products, such as meats and fish, and also for pasteurising pre-packaged food products. A similar radio frequency oven, in this case applied to pasteurising pre-cooked for products, is disclosed in document US4974503 (HERMANN BERSTORFF MASCHINENBAU GmbH).

Document WO9320699 (RF SYSTEMS SRL) discloses a method for producing bakery products on an industrial scale, which is **characterised in that** the dough fermentation step, before the cooking step in a conventional oven, is divided into two parts: a first conventional treatment part, wherein the dough is kept in a damp atmosphere at a temperature of 32 °C for several hours, and a second part wherein the dough is exposed to radio frequency radiation, at a frequency in the range of 12 to 41 MHz, for a few minutes. At the end of this second stage the dough reaches a temperature of 70 °C, whereby said dough is in a pre-cooked state when it enters the cooking stage in a conventional oven. By virtue of this, the time needed to produce the bakery products is considerably reduced.

Document GB902412A (ATELIERS DE CONSTRUCCION GUILLAUME OOMS SA) also discloses a method of cooking bakery products, which includes a stage of precooking the dough via dielectric heating with high frequency (HF) radiation, after which an actual convection or thermal radiation cooking stage is conducted in a conventional oven.

Document BE1016365A3 (CLEAN BAKING PRODUCTS BV MET B) discloses a method of cooking food products, including bakery products, which consists in simultaneously combining radio frequency cooking and convection or thermal radiation cooking so as to obtain an end product having a soft, homogeneously cooked core and a golden, crunchy crust.

Furthermore, document GB2191670 (THE ELECTRICITY COUNCIL) discloses a method of cooking a bakery loaf product, wherein the bakery product to be cooked is placed in a metallic mould that has an open top face, and it is exposed to radio frequency radiation af 27.12 MHz. More particularly, the metallic mould is connected to a bottom electrode connected to earth, and a top electrode is placed on the open surface of the metallic mould, to which a high oscillating electric voltage is applied within said frequency. A radio frequency electromagnetic field is created between the electrodes. The air temperature reaches 220 °C to 250 °C. and a cooked bakery product is obtained that has a golden crust. The thermal radiation emitted by the electrodes at a high temperature contributes to the cooking.

Document GB985442A (RADYNE LTD) describes a dielectric heating arrangement for baking bread or cakes. The bread or cakes are heated by radio-frequency heating in a container of insulating material which is conveyed between two fixed electrodes placed on each side of the conveying path and supplied with radio-frequency energy form a radio-frequency generator. The bread or cakes so baked are browned by a heat transfer process.

Document GB904371A (ATELIERS DE CONSTRUCCION GUILLAUME OOMS SA) describes a method for carrying out a complete operation bread-making cycle capable of being applied in a continuous manner. The cycle comprises a baking process by direct contact of the dough with the electrodes of a high frequency electric generator or with an electrically conducting member in direct contact with said electrodes, and finally, exposing the surface o the article to heat for the purpose of forming a crust.

So there are technological solutions for heating or cooking food products, including bakery products, via dielectric heating using radio frequency radiation in a frequency range below the microwave spectrum. Nevertheless, the applicant is not aware of any development of this technology whereby it is possible to produce bread loaves on an industrial scale and at low cooking temperatures, in order to prevent the golden crust forming on the bread.

### Disclosure of the invention

The aim of the invention is to provide a method for producing bread loaves on an industrial scale by cooking via dielectric heating, whereby it is possible to obtain a bread loaf with a very fine crust which is substantially the same colour as the crumb of the bread, without the drawbacks of the method of cooking via microwaves mentioned above.

This aim is achieved by means of the method described in claim 1.

It will be observed that the frequency range used in the radio frequency oven, between 3 MHz and 300 MHz, comprises the High Frequency or HF spectrum (between 3 and 30 Mhz), and the Very High Frequency or VHF spectrum (between 30 and 300 MHz). In practice, as will be seen later in the embodiment example, the radio frequency oven works in a narrow frequency band that corresponds to a reserved ISM frequency, preferably one of the following : 13.56 MHz; 27.12 MHz; 40.68 MHz.

The essence of the invention lies in applying the radio frequency cooking technology to produce a bread loaf with a very fine outer layer which is substantially the same colour as the crumb of the bread. The cooking stage is conducted under the conditions described in claim 1 as characteristics of the invention, whereby the dough is uniformly cooked via dielectric heating and not by transmitting heat from the mould, and it is also achieved that the temperature on the outer surface of the dough is low enough to prevent the Maillard reactions from occurring, which are responsible for giving the crust its colour in conventional cooking methods.

Also, the invention covers some preferred embodiments that are described in dependent claims 2 to 8, and the use of which is highlighted below in the detailed description of some embodiments of the invention.

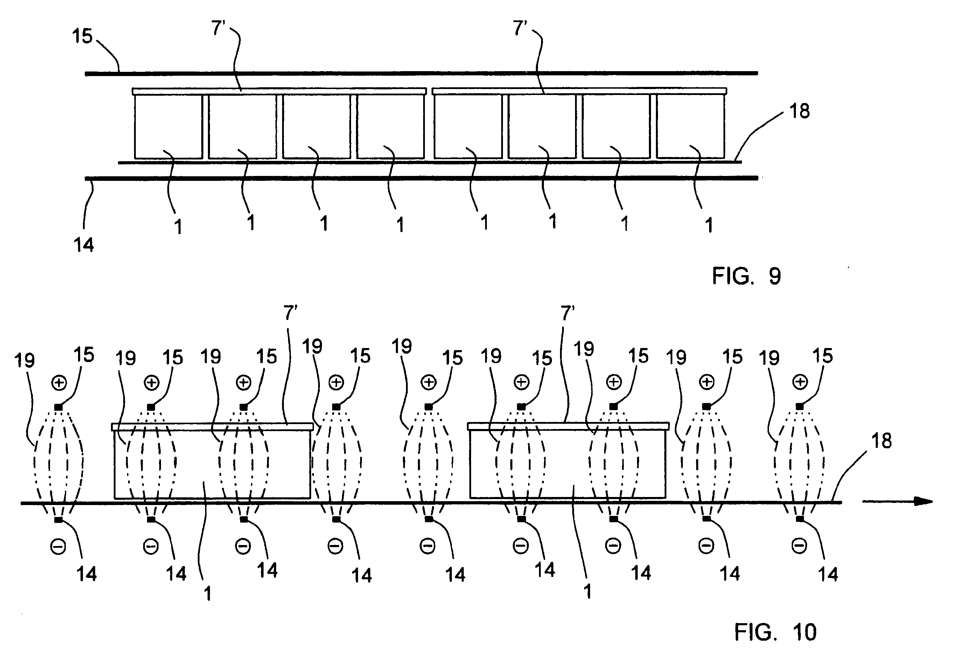

The invention also covers some improvements that are not described in Spanish patent application No. 200803738, from which priority is claimed, but which have been added to this application. These added improvements are described in claims 9 to 13, as well as in Figures 9 to 14 and at the end of the detailed description of some embodiments of the invention. Therefore the effective date of claims 9 to 13 is the filing date of this application.

Also, the invention covers detail characteristics illustrated in the detailed description of an embodiment of the invention and in the accompanying figures.

### Brief description of the drawings

The advantages and characteristics of the invention will be appreciated from the following description wherein, a non-limiting example of a preferred embodiment of the invention is described with reference to the accompanying figures.
Figs. 1 to 8 show the following:
Fig. 1, a block diagram of the main stages of the method according to the invention;
Figs. 2a - 2h, a diagram of the various stages of the stage of preparing the in-mould dough units;
Fig. 3, a diagram of the cooking stage in the radio frequency oven;
Fig. 4, a diagram of the removal of the mould cover, before entering the drying stage in the convection oven;
Fig. 5, a diagram of the drying stage in the convection oven;
Figs. 6a - 6c, a diagram of the various stages of the mould removal stage ;
Fig. 7, a diagram of the cooling and final conditioning stages ;
Fig. 8, a graph showing the temperature evolution in the core of an in-mould dough unit during the cooking stage in the radio frequency oven.
Figs. 9 to 14 illustrate the improvements that have been added to this application and which were not included in Spanish patent application No. 200803738, from which priority is claimed. These figures show:
   Fig. 9, a front diagrammatic view of a set of eight in-mould dough units inside the radio frequency oven, arranged on a conveyor belt travelling perpendicular to the drawing plane, between top and bottom electrodes extending perpendicular to the running direction of said belt;
Fig. 10, a side view corresponding to Fig. 9, where two of said eight in-mould dough units are shown from the side, travelling on the conveyor belt in the direction indicated by the arrow;

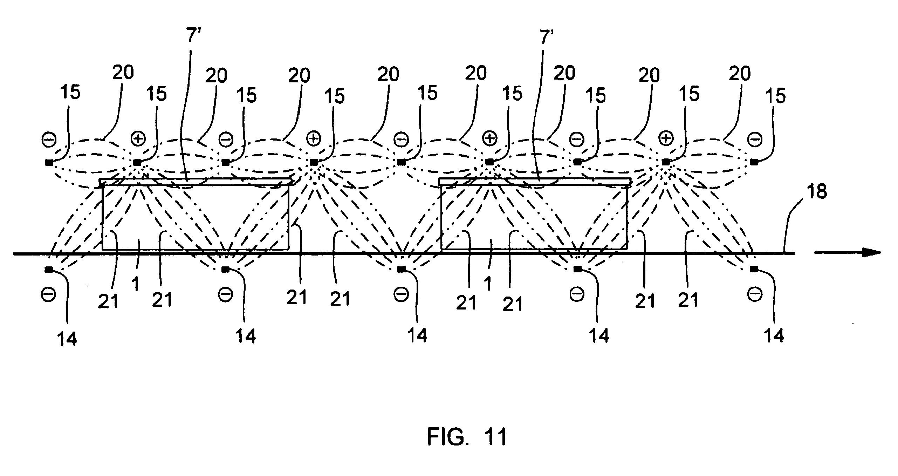

Fig. 11, a similar view to that in Fig. 10, which shows an advantageous embodiment characterized by a new advantageous electrode arrangement;

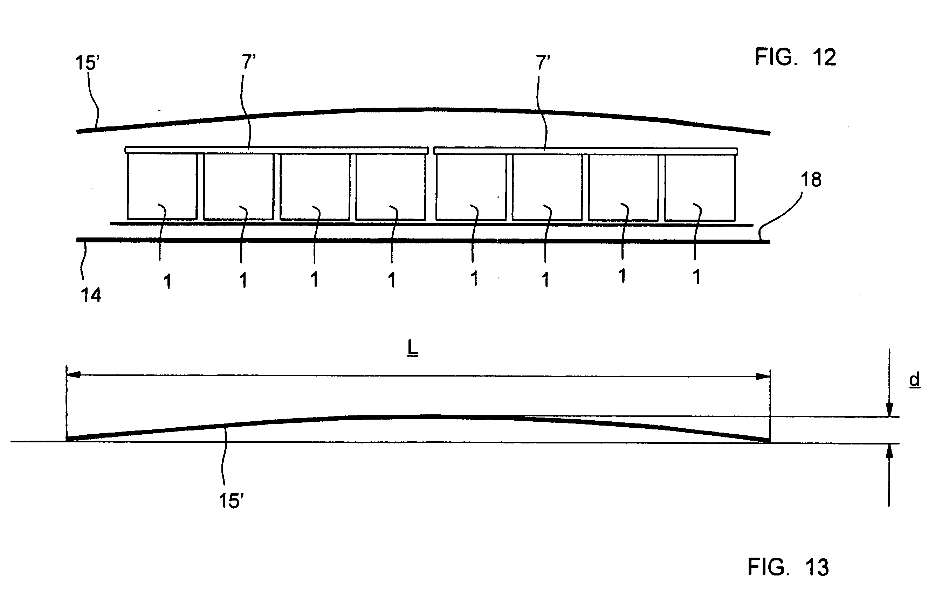

Fig. 12, a front view similar to the one in Fig. 9, which shows an advantageous embodiment **characterized in that** the top electrodes are curved;
Fig. 13, a diagram of the top curved electrode in Fig. 12, wherein the magnitudes d and L are defined;

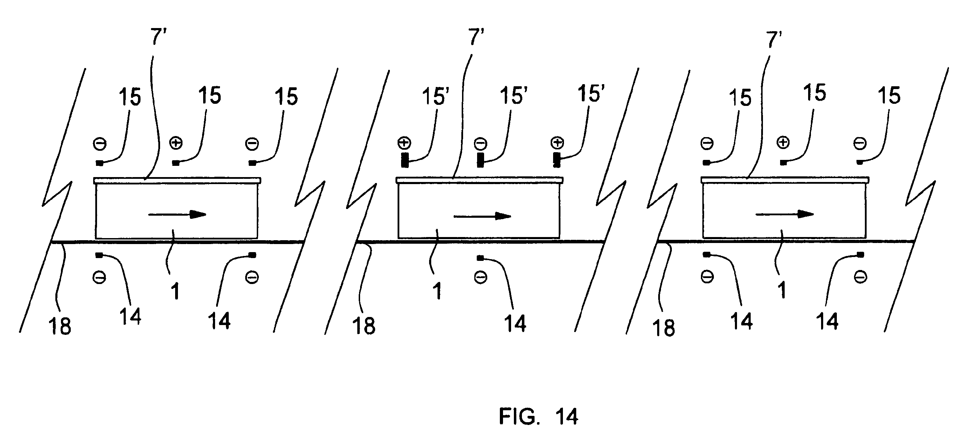

Fig. 14, a similar diagram to the one in Fig. 11, excluding the electric fields, which illustrates the fact that the top curved electrodes in Figs. 12 and 13 are only installed in a central area .

### Detailed description of some embodiments of the invention

The method described below is applied to producing bread loaves on an industrial scale, with the peculiarity that they have a very fine outer layer which is substantially the same colour as the crumb in the core of the bread.

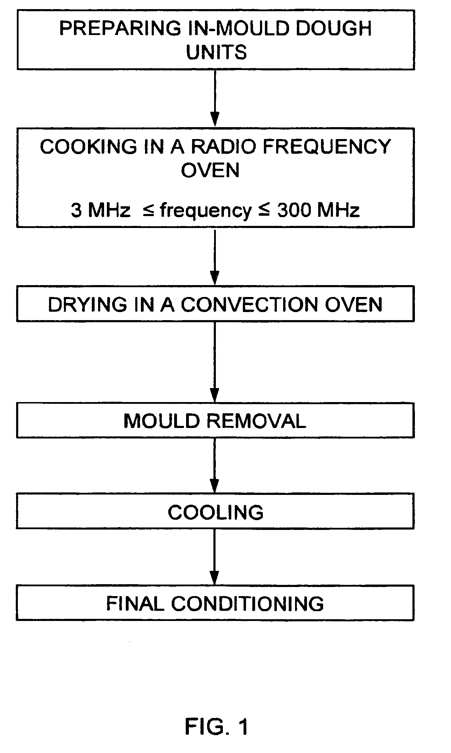

The main stages of the method according to the invention are summarised in the block diagram in Fig.1.

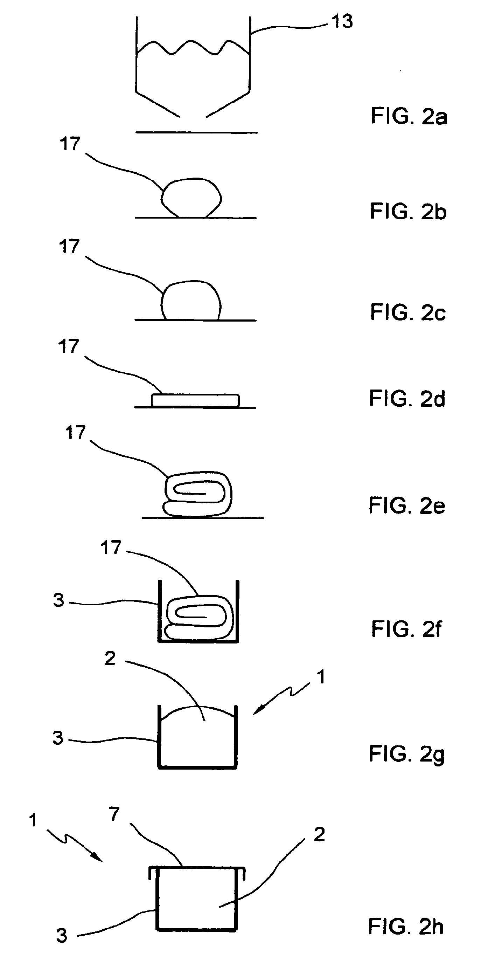

The first stage, which consists in preparing in-mould dough units, is not essentially different from the one applied in known bread loaf industrial production methods, except for that is related to the constitution of the moulds, which will be discussed later. To facilitate comprehension of the method considered as a whole, the various phases of this first step are explained briefly below, with reference to the diagram in Figs. 2a - 2h. A dispenser 13 containing kneaded bread dough (Fig. 2a) provides a regular amount of dough 17 (Fig. 2b) corresponding to a bread loaf unit and which in this example is 650 grams. This dough 17 is left to rest (Fig. 2c) and then it is rolled to obtain a laminar shape (Fig. 2d), which is then rolled onto itself (Fig. 2e). Afterwards, the rolled dough 17 (Fig. 2f) is placed in a mould 3 and it is left to ferment until a fermented dough for cooking 2 is obtained, which evenly covers most of the volume of mould 3 (Fig. 2g). This way, an in-mould dough unit 1 is obtained. Before introducing each dough unit 1 into the radio frequency oven 4, mould 3 is closed in non-hermetic fashion with a lid 7 (Fig. 2h). Lid 7 simply rests on mould 3, so that by virtue of its own weight said cover 7 is maintained on mould 3 and closes it in non-hermetic fashion, allowing steam to exit from the mould during the cooking stage.

Moulds 3 are not of the conventional type, and instead they are designed specifically for cooking in the radio frequency oven 4. Said moulds 3 consist of a parallelepiped trough with the following internal dimensions: 125 mm wide on the base, 270 mm long on the base and 130 mm high. Both the width and the length increase slightly from the base towards the top surface, to make it easier to release the bread loaves from the mould. The material of moulds 3 must fulfil the following requirements:
- be suitable for being in contact with food products;
- have mechanical strength and temperature resistance suitable for all stages of the method ;
- have a high transparence to radio frequency radiation, within the working frequencies of the radio frequency oven; the mould must have a transparence to radio frequency radiation higher than the fermented dough contained therein, so that during the radio frequency cooking stage, the mould does not reach a temperature above that of the fermented dough;
- have a high thermal conductivity, so as not to slow too much the fermentation of the dough in the first stage before cooking (Figs. 2f and 2g).

The material of lid 7 must fulfil the same requirements as the material of mould 3, and in addition, it is also advisable that it has a high density since lid 7 must be heavy enough to remain in position by virtue of gravity, closing mould 3, during the cooking stage in the radio frequency oven.

Based on these requirements, which are to be considered part of this invention, the choice of materials used to make mould 3 and lid 7 is within the scope of a person skilled in the art. In this example, the material used to make mould 3 is a thermoplastic polymer, and the material used to make lid 7 is another thermoplastic polymer that is denser than the former.

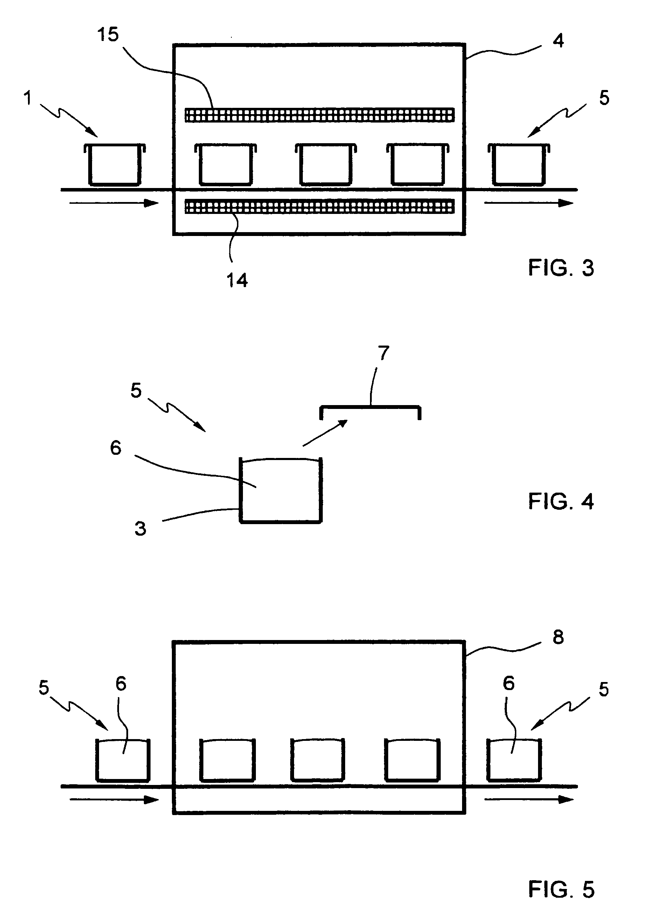

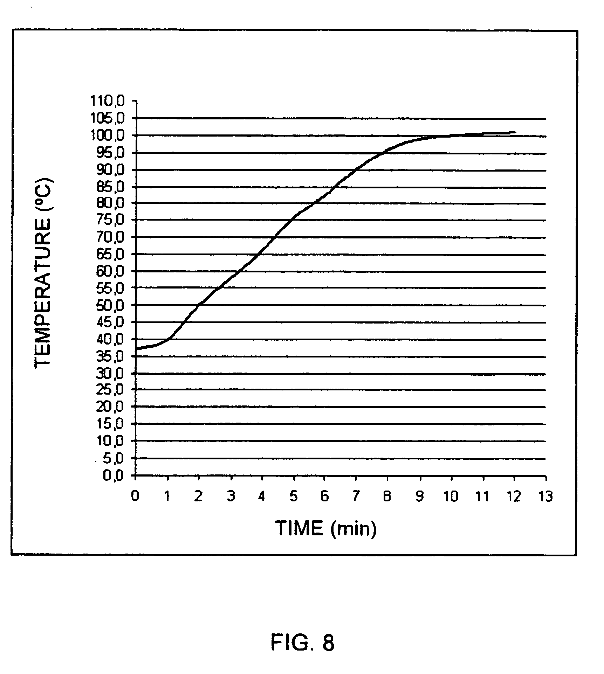

As illustrated diagrammatically in Fig. 3, the in-mould dough units 1 prepared in the first stage are placed on a conveyor belt and pass through a radio frequency oven 4 wherein they are exposed to radio frequency radiation. Radio frequency oven 4 is of the same type as the one described in said document US4974503 (HERMANN BERSTORFF MASCHINENBAU GmbH). In-mould dough units 1 travel inside oven 4 between a series of lower electrodes 14 connected to earth, and placed under the conveyor belt, and a series of top electrodes 15 connected to a generator that provides cyclical high voltage with high frequency. The voltage applied to top electrodes 15 is of the order of 4 kV with a cycle frequency of 27.12 MHz. Thus, between each pair of electrodes 14, 15 a radio frequency radiation is produced, with a frequency of 27.12 MHz, which causes dielectric heating in fermented dough 2 that is contained in moulds 3. Oven 4 in this example is provided with a system that enables a different voltage to be applied to the various top electrodes 15, so that it is possible to adjust the intensity of the radio frequency radiation along the lineal trajectory of units 1 inside oven 4. Due to the fact that the transparency of mould 3 and lid 7 to radio frequency radiation is high, the dielectric heating is much more important in fermented dough 2 than in moulds 3 and lid 7, whereby fermented dough 2 reaches a higher temperature than mould 3 and lid 7. The intensity of the radio frequency radiation in oven 4, as well as the time that units 1 remain in said oven 4, have been adjusted using experimental calculations and assays, so that on exit from oven 4 the bread loaves are cooked and the temperature in the core of the fermented dough has not risen noticeably above a saturation level corresponding substantially to the saturation temperature of water at the pressure prevalent in said core. More particularly, when units 1 enter oven 4 the temperature in the core of fermented dough 2 is lower or equal to 40 °C, and during the time it stays in oven 4 said temperature increases until it reaches a saturation level within a range of 95 °C to 105 °C, with said saturation level being maintained for at least 2 minutes. Fig. 8 shows the evolution of the temperature in the core of fermented dough 2 throughout the time that units 1 remain inside oven 4. The data in Fig. 8 was obtained through experimental means using a fibre-optic thermometrical probe inserted into fermented dough 2. As shown, the evolution of the temperature shows a first stage between minutes 0 and 8.5 where the temperature increases progressively because the heat accumulation mechanism is due to sensible heat, followed by a second stage between minutes 8.5 and 12, where the temperature is maintained at a saturation value because heat accumulation is due to latent heat. This saturation value increases slightly (in comparison with the temperature increase in the first stage ), from 98 °C to 101 °C, mainly because a pressure increase occurs inside the mould, caused by water evaporation. The total time that units 1 remain in oven 4 is 12 minutes, with the second stage lasting 3.5 minutes.

Upon exiting oven 4, units 1 exit in the form of in-mould cooked bread loaves 5, consisting of a cooked bread loaf 6 contained in its mould 3. Then, lid 7 is removed from moulds 3, as shown diagrammatically in Fig. 4.

Next, as shown diagrammatically in Fig. 5, the in-mould bread loaves 5, without lid 7, undergo a drying stage so that they lose part of the dampness they contain, and therefore it is easier to remove the mould. To this end, they travel through a convention oven 8. The time that they remain in oven 8 is not enough to change the colour of the outer surface of the bread loaves. In this example, oven 8 is at a temperature below 220 °C, and the bread loaves remain in oven 8 for less than 10 minutes.

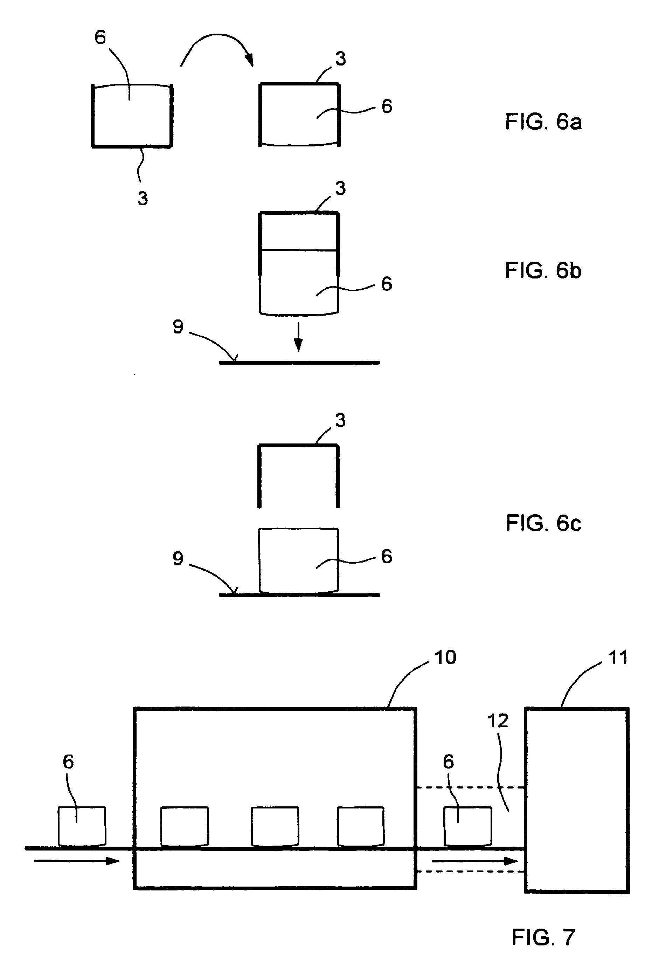

Once the drying stage is completed, the mould removal stage takes place, which is illustrated diagrammatically in Figs. 6a - 6c. The mould is removed by gravity, turning over mould 3. So that cooked bread loaf 6 is released more easily from mould 3 without being damaged, before turning over mould 3, air is blown between cooked bread loaf 6 and said mould 3. When turning over mould 3 cooked bread load 6 falls down by gravity and lies on a cooling tray 9, on its face corresponding to the top open face of mould 3 during the drying stage. This face of cooked bread loaf 6 has greater mechanical strength than the others, because it was exposed to air during the drying process. Cooked bread loaf 6 maintains this resting position, on said surface with greater mechanical strength, during the subsequent cooling stage.

The cooling and final conditioning stages are shown diagrammatically in Fig. 7.

The cooling stage takes place in a cooling chamber 10 through which there travel cooked bread loaves 6. Cooling chamber 10 is equipped with isolation means against outside microbial contamination, which in this example consist of a system that constantly injects into chamber 10 a flow of filtered air, so that excess pressure is maintained inside chamber 10 with respect to the outside atmosphere. Chamber 10 is maintained at a temperature of 25 °C, with cooked bread loaves 6 remaining in said chamber 10 for 65 minutes. Upon exit from the chamber, the temperature in the core of cooked bread loaves 6 is approximately 30 °C.

After this cooling stage cooked bread loaves 6 enter a clean area 11 where the final conditioning stages take place:
- a slicing stage wherein said bread loaves released from the mould are cut into slices; and
- a packaging stage wherein said slices are packaged hermetically in a bag.

The bread loaf produced has a fine layer that is substantially the same colour as the crumb in the core of the loaf.

Clean area 11 is equipped with protection means against outside microbial contamination and active protection means against bacterial growth. If it is necessary to increase the bacterial growth control even further, between cooling chamber 10 and clean area 11 cooked bread loaves 6 released from the mould travel inside of a tunnel 12, which is also provided with isolation means against outside microbial contamination.

In this example, the isolation means against outside microbial contamination in tunnel 12 and in clean area 11 are similar to those fitted to chamber 10: a system that constantly injects a flow of filtered air so that a excess pressure is maintained with respect to the outside atmosphere. Also, the compressed air used by the various processes in clean area 11 is filtered air. The active protection means against bacterial growth in clean area 11 comprise germicide fluorescents.

A description is provided below of some improvements that have been developed subsequent to the filing of Spanish patent application No. 200803738, from which priority is claimed, and which are intended to optimise the cooking process of bread loaves in the radio frequency oven. These improvements are the result of experimental tests conducted by the applicant in an industrial-scale plant wherein the method according to claim1 has been implemented.

In the said industrial-scale plant, in-mould dough units 1 travel inside the radio frequency oven, arranged on a conveyor belt 18 in rows of eight units, lying longitudinally in the feeding direction of said belt 18, as illustrated diagrammatically in Figs. 9 and 10. Each group of eight moulds is closed at the top by two lids 7', with each of said lids 7' covering a subgroup of four moulds. Lids 7' are placed so that they simply lie on the moulds, whereby due to their own weight these lids 7' are maintained on the moulds and close them in non-hermetic fashion, allowing steam to exit from said moulds during the cooking stage. These lids 7' have essentially the same characteristics as lids 7 for one single mould as described above, with the difference that they are large enough to cover four moulds at a time.

In the radio frequency oven, bottom 14 and top 15 electrodes are shaped as parallel bars arranged in two planes: a top plane where the bars or top electrodes 15 lie, and a bottom plane, below belt 18, where the bottom bars or electrodes 14 lie, so that in-mould dough units 1 placed on conveyor belt 18 travel between these two planes of top 15 and bottom 14 electrodes.

In a first test phase, electrodes 14 and 15 were arranged in pairs with opposite sign and aligned vertically, as illustrated in Fig. 10. This is the usual electrode arrangement in known, state-of-the-art radio frequency ovens. In the figures, the electric field between the electrodes is represented diagrammatically by dotted lines. As can be seen in Fig. 10, a vertical electric field 19 is produced between every pair of electrodes 14, 15.

The experimental tests conducted with this initial electrode arrangement showed that it was difficult to reach a homogeneous cooking of the bread. In fact, in cooking the bread dough sufficiently at the top, it was easy to fall into the trap of cooking the bottom of the dough too much, or even burning it. On the basis of this evidence, it was deduced that the problem of non-even cooking was essentially caused by the presence of lids 7'

The solution to the problem raised has consisted in modifying the distribution of electrodes 14, 15, arranging them so that top electrodes 15 produce between them a horizontal electric field 20, through which the top part of in-mould dough units 1 travelling between top electrodes 15 and bottom electrodes 14 pass, with said horizontal electric field 20 superimposing the electric field 21 generated between the pairs of electrodes constituted by a top electrode 15 and a bottom electrode 14. The electrode arrangement shown in Fig. 11 offered particularly satisfactory results. According to this preferred arrangement, top electrodes 15 are arranged alternatively with opposite signs, and bottom electrodes 14 are arranged in pairs only with the top electrodes 15 having the same sign. Obviously, the idea of "sign" must be understood herein in the broadest sense: the electrodes are connected to a first level oscillating voltage (positive electrodes, with a "+ " sign in the figures) or to a second level of oscillating voltage (negative electrodes, with a "- " sign in the figures), with the difference between these two levels of oscillating voltage creating the oscillating electric field between the electrodes. In the preferred embodiment shown in Fig. 11, bottom electrodes 14 have the same sign and each of said bottom electrodes 14 is arranged under a top electrode 15 with the same sign and aligned vertically therewith. The number of top electrodes is greater than the number of bottom electrodes, since for each pair of top electrodes 15 with opposite signs, there is only one bottom electrode 14, as can be seen in Fig. 11. By way of this arrangement, between every two top electrodes 15 with opposite signs, a horizontal electric field is created 20, while between each pair of top 15 and bottom 14 electrodes with opposite signs an oblique electric field 21 is created, because electrodes 14, 15 with opposite signs are arranged in an offset manner with respect to the vertical. Consequently, when in-mould dough units 1 travel between top electrodes 15 and bottom electrodes 14, the top of each unit 1 passes through an area with a greater electric field than the bottom part. This is how the effect of lid 7' on the electric field is compensated, whereby the electric field in the bread dough contained in each mould, is more homogeneous than in the electrode arrangement shown above in Fig. 10. The results obtained are satisfactory: thanks to this new arrangement of electrodes 14, 15, the bread dough is cooked homogeneously.

As a person skilled in the art knows full well, the electric fields 19, 20, 21 shown in the figures, are represented as a diagram and are not intended to reflect the real electric field generated by the full set of electrodes. Even so, as the person skilled in the art also knows, this diagram is sufficient to illustrate the effect of the new electrode arrangement. Furthermore, the person skilled in the art will also understand that everything mentioned in relation with lids 7', referring to the disturbance these lids cause during the cooking of the bread dough in the mould, and to the solution proposed for compensating this effect, is equally valid when using individual lids 7, or other lids covering various moulds.

A second problem observed in said industrial-scale plant, which is different from the problem of homogeneously cooking the bread dough that has just been discussed, consists of the difficulty in reaching a proper cooking if the in-mould dough units 1 travelling through the central area of electrodes 14, 15; in other words, in the central area according to the front view in Fig. 9. In fact, in an arrangement of eight units in a row as shown in Fig. 9, the two central units 1 are not cooked to the same quality as the other six. In particular, the bread loaves obtained from these two central units are cooked too quickly in comparison with the bread lying at the level of the ends of the electrodes.

In order to solve this problem, electrodes 15, which were straight bars, have been replaced by electrodes 15' in the shape of a slightly curved bar, so that the central area of electrode 15' is further away from the in-mould dough units 1 than the areas at the ends. Fig. 12 shows a diagram of the plant with these curved top electrodes 15'. This curvature in top electrodes 15' has the effect of reducing the electric field in the central area with respect to the areas lying at the ends of the electrodes, whereby the bread loaves are cooked homogeneously in the transverse direction.

Preferably, the curvature of electrodes 15' is such that the centre of electrode 15' is separated from the horizontal that passes by the ends of said electrode 15' by a distance d of between 0.5 % and 3.0 % of the length L of said electrode 15'. More preferably, the distance d is between 0.5 % and 1.5 % of the length L of electrode 15'. Fig. 13 illustrates these parameters d and L. In the plant used, length L of electrodes 15' is 1.8 metres and the separation distance d of the central area of the electrode is 1 centimetre. Obviously, in Figs. 12 and 13 the curvature of top electrodes 15' has been exaggerated, with the sole purpose of facilitating the description.

Moreover, it has been observed that an optimum quality is obtained in the bread loaves when the curved top electrodes 15' are only placed in an intermediate area of the radio frequency oven, with respect to the feeding direction of the in-mould dough units 1, with the top electrodes in the other areas being straight electrodes 15, as shown in a diagram in Fig. 14. More specifically, the curved top electrodes 15' are only placed in an intermediate area where the temperature in the core of fermented dough 2 reaches the value of 70° C. The effect of the curvature in top electrodes 15' is particularly noticeable in said intermediate area, because at this temperature level of 70 °C the fermentation process is interrupted, due to deactivation of the yeast, and the starch gelatinising process begins which leads to the actual cooking of the dough.

These improvements are contained in claims 9 to 13 which are subordinate to claim 1. Nevertheless, a person skilled in the art will recognise without any problem that said improvements are equally applicable, and they provide the advantage effects disclosed, when they are applied more generally, beyond claim 1, to a method for producing bread loaves where the bread is not cooked entirely by dielectric heating in the radio frequency oven. In particular, this description also comprises an application of the improvements described in claims 9 to 13 to a method for producing bread loaves by cooking via dielectric cooking, which comprises a cooking stage wherein in-mould dough units, consisting of a fermented dough to be cooked contained in a mould, pass through a radio frequency oven where they are exposed to radio frequency radiation, within a frequency range of 3 MHz to 300 MHz, which causes the dielectric heating of said fermented dough, where the top surface of said mould is closed in non-hermetic fashion by a lid, with said lid and said mould being configured so as not to be subjected, by the effect of said radio frequency radiation, to dielectric heating greater than that of said fermented dough contained in said mould.

## Claims

1. Method for producing bread loaves by cooking via dielectric heating, comprising a cooking stage wherein in-mould dough units (1), consisting of fermented dough (2) to be cooked contained in a mould (3), pass through a radio frequency oven (4) wherein they are exposed to radio frequency radiation, within a frequency range of 3 MHz to 300 MHz, which causes a dielectric heating of said fermented dough (2), **characterized in that**
- the top surface of said mould (3) is closed in a non-hermetic fashion by a lid (7) and said mould (3) is made from non-metallic material, with said lid (7) and said mould (3) being configured so as not to be subjected, by the effect of said radio frequency radiation, to dielectric heating greater than that of said fermented dough (2) contained in said mould (2);
- the intensity of said radio frequency radiation while said loaf dough units (1) stay in said radio frequency oven (4) is adjusted so that the temperature in the core of said fermented dough (2), which increases owing to the dielectric heating caused in said fermented dough (2) by said radio frequency radiation, reaches a saturation level that corresponds substantially to the saturation temperature of water at the pressure prevalent in said core and subsequently said temperature in the core is maintained in said saturation level or below it; and
- each of said in-mould dough units (1) remains in said radio frequency oven (4) under these conditions until fermented dough (2) contained therein is cooked completely, by the effect of said dielectric heating produced in fermented dough (2) by radio frequency radiation; so that said in-mould dough units (1) exit said radio frequency oven (4) in the state of cooked in-mould bread loaves (5), consisting of a cooked bread loaf (6) contained in its mould (3) and having a very fine outer layer substantially the same colour as the crumb of the bread.

2. Method according to claim 1, **characterized in that** before entering said radio frequency oven (4), the temperature of said in-mould dough units (1) in the core of said fermented dough (2), is below or equal to 40 °C; said saturation level is within a temperature range of 95 °C to 105 °C; and the temperature in said core is maintained within this temperature range for at least 2 minutes.

3. Method according to any of the claims 1 to 2, **characterized in that** after the cooking stage in radio frequency oven (4), and before a mould removal stage, a drying stage is carried out wherein said cooked in-mould bread loaves (5) are heated by convection to eliminate the dampness inside said cooked in-mould bread loaves (6) without causing the colour of the outer surface of said bread loaves to change.

4. Method according to claim 3, **characterized in that** said drying stage is carried out in a convection oven (8).

5. Method according to any of the claims 1 to 4, **characterized in that** said lid (7) is configured so that it is not subjected, by the effect of said radio frequency radiation, to dielectric heating greater than that of said fermented dough (2) contained in said mould (3).

6. Method according to claim 3**, characterized in that** said drying stage is carried out after having previously removed said lid (7) from said moulds (3), so that said moulds (3) have an open top surface, and after said drying stage, a mould removal stage is carried out comprising an operation of turning over the mould (3) and an operation of blowing air between said cooked bread loaf (6) and said mould (3) containing it, so that the cooked bread loaf (6) contained in said mould falls down by gravity and rests on a surface (9) on its face that was on the top open face of said mould (3), with said cooked bread loaf (6) remaining in this resting position during a subsequent cooling stage.

7. Method according to claim 1, wherein after the cooking stage in said radio frequency oven (4), a mould removal stage is carried out, wherein said cooked bread loaves (6) are removed from said moulds (3), and a cooling stage of said cooked bread loaves (6), **characterized in that** said cooling stage is carried out in a cooling chamber (10) equipped with isolation means against outside microbial contamination, and after said cooling stage some final conditioning stages are carried out, comprising a slicing stage wherein said cooked bread loaves (6) removed from their mould are cut into slices and a packaging stage wherein said slices are packed in a package, with said final conditioning stages being carried out in a clean area (11) equipped with protection means against outside microbial contamination and active protection means against bacterial growth.

8. Method according to claim 7, **characterized in that** between said cooling chamber (10) and said clean area (11) said cooked bread loaves (6) removed from their mould travel inside a tunnel (12) also equipped with isolation means against outside microbial contamination.

9. Method according to any of the claims 1 to 8, where the cooking of said in-mould dough units (1) via dielectric heating in a radio frequency oven (4) is carried out by travelling said in-mould dough units (1) between bottom electrodes (14) and top electrodes (15, 15') connected to a source of oscillating voltage, so that said electrodes (14, 15, 15') generate an oscillating electric field that produces said radio frequency radiation, **characterized in that** the top part of said in-mould dough units (1) passes through a horizontal electric field (20) generated by top electrodes (15, 15') between one another, said horizontal electric field (20) superimposing an electric field (21) generated between one another by the pairs of electrodes constituted by a top electrode (15, 15') and a bottom electrode (14).

10. Method according to claim 9, **characterized in that** said top electrodes (15, 15') are arranged alternatively with opposite signs and said bottom electrodes (14) are arranged matching with the top electrodes (15, 15') with the same sign.

11. Method according to claim 10, **characterized in that** bottom electrodes (14) have the same sign and each bottom electrode (14) is arranged under a top electrode (15, 15') with the same sign and aligned vertically therewith, so that between every two top electrodes (15, 15') with opposite signs a horizontal electric field (20) is created, while between each pair of top (15, 15') and bottom (14) electrodes with opposite signs an oblique electric field (21) is created.

12. Method according to any of the claims 1 to 11, where cooking of said in-mould dough units (1) via dielectric heating in a radio frequency oven (4) is carried out by travelling said in-mould dough units (1) between bottom electrodes (14) and top electrodes (15, 15') connected to a source of oscillating voltage, so that said electrodes (14, 15, 15') generate an oscillating electric field that produces said radio frequency radiation, with said bottom (14) and top (15, 15') electrodes being configured in the form of bars that extend transversally with respect to the feeding direction of said in-mould dough units (1), **characterized in that** at least some (15') of said top electrodes have a slight curvature oriented so as to put the central area (1) of said top curved electrodes (15) further away from said in-mould dough units (1).

13. Method according to claim 12, **characterized in that** said top curved electrodes (15') are only placed in an intermediate area of said radio frequency oven (4), with respect to the feeding direction of said in-mould dough units (1), with the top electrodes in the other areas being electrodes (15) without a curvature, said intermediate area corresponding to an area wherein the temperature in the core of fermented dough (2) contained in said in-mould dough units (1) reaches the value of 70° C.

## Patentansprüche

1. Verfahren zur Herstellung von Brotlaiben durch Backen mittels dielektrischer Heizung, eine Backstufe umfassend, wobei Formeinheiten mit Teig (1), bestehend aus einem zu backenden, in einer Form (3) befindlichen fermentierten Teig (2) einen Hochfrequenzofen durchfahren, wobei sie einer Hochfrequenzstrahlung in einem Frequenzbereich von 3 MHz bis 300 MHz ausgesetzt sind, die eine dielektrische Erhitzung des fermentierten Teigs (2) bewirkt, **gekennzeichnet dadurch, dass**
- die obere Fläche der Form (3) durch einen Deckel (7) nicht hermetisch verschlossen ist und die Form (3) aus einem nicht metallischen Material hergestellt ist, wobei der Deckel (7) und die Form (3) so gestaltet sind, dass sie durch die Effekte der Hochfrequenzstrahlung keinem dielektrischen Erhitzen ausgesetzt sind, dass größer ist als das des fermentierten Teigs (2), der sich in der Form (3) befindet;
- während die Laibteigeinheiten (1) in dem Hochfrequenzofen (4) verweilen, wird die Intensität der Hochfrequenzstrahlung justiert, so dass die Temperatur im Kern des fermentierten Teigs (2), die auf Grund des dielektrischen Erhitzens durch die Hochfrequenzstrahlung in dem fermentierten Teig (2) ansteigt, einen Sättigungsgrad erreicht, der im Wesentlichen der Sättigungstemperatur von Wasser bei dem vorherrschenden Druck im Kern entspricht, und im Wesentlichen die Temperatur im Kern bei dem Sättigungsgrad oder darunter aufrechterhalten wird; und
- jede der Formeinheiten mit Teig (1) im Hochfrequenzofen (4) unter diesen Bedingungen verbleien, bis der darin enthaltene fermentierte Teig (2), auf Grund des im fermentierten Teig (2) erzeugten dielektrischen Erhitzens durch die Hochfrequenzstrahlung, vollständig gebacken ist; so dass die Formeinheiten mit Teig (1) den Hochfrequenzofen (4) im Zustand von Formen mit gebackenen Brotlaiben (5), bestehend aus einem gebackenen Brotlaib (6) in seiner Form (3) enthalten, und mit einer sehr feinen Außenschicht von im Wesentlichen derselben Farbe wie die Brotkrume, verlassen.

2. Verfahren gemäß Anspruch 1, **gekennzeichnet dadurch, dass** vor dem Eintritt in den Hochfrequenzofen (4) die Temperatur der Formeinheiten mit Teig (1) im Kern des fermentierten Teigs (2) kleiner oder gleich 40°C beträgt; der Sättigungsgrad in einem Temperaturbereich von 95°C bis 105°C ist, und die Temperatur im Kern für mindestens 2 Minuten in diesem Temperaturbereich aufrechterhalten wird.

3. Verfahren gemäß einem der Ansprüche 1 und 2, **gekennzeichnet dadurch, dass** nach der Backstufe im Hochfrequenzofen (4) und vor der Stufe der Formentnahme, eine Trocknungsstufe durchgeführt wird, wobei die Formen mit gebackenen Brotlaiben (6) durch Konvektion erhitzt werden, um die Feuchtigkeit in den Formen mit gebackenen Brotlaiben (6) zu eliminieren, ohne die Farbe der Aussenfläche der Brotlaibe zu verändern.

4. Verfahren gemäß Anspruch 3, **dadurch gekennzeichnet, dass** die Trocknungsstufe in einem Konvektionsofen (8) durchgeführt wird.

5. Verfahren gemäß einem der Ansprüche 1 bis 4, **dadurch gekennzeichnet, dass** der Deckel (7) so gestaltet ist, dass er durch den Effekt der Hochfrequenzstrahlung keinem dielektrischen Erhitzen ausgesetzt ist, das größer ist als das des fermentierten Teigs (2) der in der Form (3) enthalten ist.

6. Verfahren gemäß Anspruch 3, **dadurch gekennzeichnet, dass** die Trocknungsstufe nach dem vorherigen Entfernen des Deckels (7) von der Form (3) ausgeführt wird, so dass die Formen(3) eine offene obere Fläche aufweisen und nach der Trocknungsstufe, eine Formentfernungsstufe ausgeführt wird, die einen Arbeitsschritt Wendens der Form (3) und einen Arbeitsschritt des Lufteinblasens zwischen den gebackenen Brotlaib (6) und der Form (3) ,die den Brotlaib enthält, umfasst, so dass der in der Form befindliche gebackene Brotlaib (6) durch die Schwerkraft heraus fällt und auf eine Fläche (9) mit der Seite liegt, die vorher auf der oberen Fläche der Form (3) war, wobei der gebackenen Brotlaib (6) in dieser Ruheposition während einer nachfolgenden Kühlstufe verbleibt.

7. Verfahren gemäß Anspruch 1, wobei nach der Backstufe in dem Hochfrequenzofen (4), eine Formentnahmestufe durchgeführt wird, in der die gebackenen Brotlaibe (6) aus den Formen (3) entfernt werden und eine Kühlstufe der gebackenen Brotlaibe (6) durchgeführt wird, **dadurch gekennzeichnet, dass**
die Kühlstufe in einer mit Isolationsmitteln gegen äußere mikrobiologische Kontamination ausgestattete Kühlkammer (10) durchgeführt wird, und nach der Kühlstufe einige letzte Aufbereitungsschritte durchgeführt werden, die eine Schneidstufe, in der die aus ihrer Form entfernten gebackenen Brotlaibe (6) in Scheiben geschnitten werden, und eine Verpackungsstufe, in der die Scheiben in Pakete verpackt werden, wobei die letzten Aufbereitungsschritte in einem mit Schutzmitteln gegen äußere mikrobiologische Kontamination und aktiven Schutzmitteln gegen Bakterienwachstum ausgerüsteten Reinraum (11) ausgeführt werden.

8. Verfahren gemäß Anspruch 7, **dadurch gekennzeichnet, dass** die aus ihrer Form entnommenen gebackenen Brotlaibe (6) zwischen der Kühlkammer (10) und dem Reinraum (11) einen ebenfalls mit Isolationsmitteln gegen äußere mikrobiologische Kontamination ausgestatteten Tunnel (12) durchfahren.

9. Verfahren gemäß einem der Ansprüche 1 bis 8 in dem Backen der Formeinheiten mit Teig (1) mittels dielektrischem Erhitzen in einem Hochfrequenzofen (4) durch Fahren der Formeinheiten mit Teig (1) zwischen unteren Elektroden (14) und oberen Elektroden (15, 15') die mit einer oszillierenden Spannungsquelle verbunden sind, so dass die Elektroden (14, 15, 15') ein oszillierendes elektrisches Feld erzeugen, das die Hochfrequenzstrahlung erzeugt, **dadurch gekennzeichnet, dass** der obere Bereich der Formeinheiten mit Teig (1) ein durch das zwischen den oberen Elektroden(15, 15') erzeugtes horizontales Feld (20) durchfährt, das horizontale elektrische Feld (20) ein elektrisches Feld (21) überlagert, das zwischen den Elektrodenpaaren gebildet wird, die jeweils durch eine obere Elektrode (15,15') und eine untere Elektrode (14) erzeugt werden.

10. Verfahren gemäß Anspruch 9, **dadurch gekennzeichnet, dass** die oberen Elektroden (15, 15') abwechselnd mit entgegengesetzter Polung angeordnet sind und die unteren Elektroden (14) passend zu den oberen Elektroden (15, 15') mit der gleichen Polung angeordnet sind.

11. Verfahren gemäß Anspruch 10, **dadurch gekennzeichnet, dass** die unteren Elektroden (14) die gleiche Polung haben und jede untere Elektrode (14) unter einer oberen Elektrode (15, 15') mit der gleichen Polung angeordnet ist und mit dieser vertikal ausgerichtet ist, so dass zwischen jeden zwei oberen Elektroden (15, 15') mit entgegengesetzter Polung ein horizontales elektrisches Feld (20) erzeugt wird, während zwischen jedem Paar der oberen (15, 15') und unteren Elektroden (14) mit entgegengesetzter Polung ein diagonales elektrisches Feld (21) erzeugt wird.

12. Verfahren gemäß einem der Ansprüche 1 bis 11, wobei Backen der Formeinheiten mit Teig (1) mittels dielektrischem Erhitzen in einem Hochfrequenzofen (4) durch Durchfahren der Formeinheiten mit Teig (1) zwischen mit einer oszillierenden Spannungsquelle verbundenen unteren Elektroden (14) und oberen Elektroden (15, 15') durchgeführt wird, so dass die Elektroden (14, 15, 15') ein oszillierendes elektrisches Feld erzeugen,das eine Hochfrequenzstrahlung erzeugt, wobei die unteren Elektroden (14) und die oberen Elektroden (15, 15') in Form von Stäben ausgestaltet sind, die sich bezüglich der Zufuhrrichtung der Formeinheiten mit Teig (1) transversal erstrecken, **dadurch gekennzeichnet, dass** wenigstens einige der oberen Elektroden(15') eine leichte Krümmung haben, die ausgerichtet ist, um den zentralen Bereich (1) der oberen gekrümmten Elektroden (15) weiter weg von den Formeinheiten mit Teig (1) zu platzieren.

13. Verfahren gemäß Anspruch 12, **dadurch gekennzeichnet, dass** die oberen gekrümmten Elektroden (15') bezüglich der Zufuhrrichtung der, Formeinheiten mit Teig (1) nur in einem Zwischenbereich des Hochfrequenzofens (4) angeordnet sind, wobei die oberen Elektroden in den anderen Bereichen Elektroden (15) ohne Krümmung sind, wobei der Zwischenbereich einem Bereich entspricht, in dem die Temperatur im Kern des in Formeinheiten mit Teig (1) befindlichen fermentierten Teigs (2) einen Wert von 70°C erreicht.

## Revendications

1. Procédé de production de pains par cuisson via un chauffage diélectrique, comprenant une étape de cuisson dans laquelle des unités de pâte en moule (1), constituées de pâte fermentée (2) à cuire contenue dans un moule (3), passent à travers un four à fréquence radioélectrique (4) dans lequel elles sont exposées à un rayonnement à fréquence radioélectrique, dans une plage de fréquences comprise entre 3 et 300 MHz, qui provoque un chauffage diélectrique de ladite pâte fermentée (2), **caractérisé en ce que**
- la surface supérieure dudit moule (3) est fermée d'une manière non hermétique par un couvercle (7) et ledit moule (3) est composé d'un matériau non métallique, ledit couvercle (7) et ledit moule (3) étant configurés de façon à ne pas être soumis, par l'effet dudit rayonnement à fréquence radioélectrique, à un chauffage diélectrique supérieur à celui de ladite pâte fermentée (2) contenue dans ledit moule (2) ;
- If intensité dudit rayonnement à fréquence radioélectrique pendant que les unités de pâte à pain (1) restent dans ledit four à fréquence radioélectrique (4) est ajustée de façon à ce que la température au coeur de ladite pâte fermentée (2), qui augmente en raison du chauffage diélectrique provoqué dans ladite pâte fermentée (2) par ledit rayonnement à fréquence radioélectrique, atteigne un niveau de saturation qui correspond sensiblement à la température de saturation de l'eau à la pression régnant dans ledit coeur, et ensuite ladite température dans le coeur est maintenue audit niveau de saturation ou en dessous de celui-ci ; et
- chacune desdites unités de pâte en moule (1) reste dans ledit four à fréquence radioélectrique (4) dans ces conditions jusqu'à ce que la pâte fermentée (2) contenue dans celles-ci soit complètement cuite, par l'effet dudit chauffage diélectrique produit dans la pâte fermentée (2) par un rayonnement à fréquence radioélectrique, de façon à ce que lesdites unités de pâte en moule (1) sortent dudit four à fréquence radioélectrique (4) dans l'état de pains en moule cuits (5), constitués d'un pain cuit (6) contenu dans son moule (3) et ayant une très fine couche extérieure sensiblement de la même couleur que la mie du pain.

2. Procédé selon la revendication 1, **caractérisé en ce que**, avant d'entrer dans ledit four à fréquence radioélectrique (4), la température desdites unités de pâte en moule (1), au coeur de ladite pâte fermentée (2), est inférieure ou égale à 40 °C, ledit niveau de saturation est situé dans une plage de température comprise entre 95 et 105 °C, et la température dans ledit coeur est maintenue dans cette plage de température pendant au moins 2 minutes.

3. Procédé selon l'une quelconque des revendications 1 à 2, **caractérisé en ce qu'**après l'étape de cuisson dans un four à fréquence radioélectrique (4) et avant une étape de retrait du moule, une étape de séchage est effectuée dans laquelle lesdits pains en moule cuits (5) sont chauffés par convection afin d'éliminer l'humidité à l'intérieur desdits pains en moule cuits (6) sans provoquer de modification de la couleur de la surface extérieure desdits pains.

4. Procédé selon la revendication 3, **caractérisé en ce que** ladite étape de séchage est effectuée dans un four à convection (8).

5. Procédé selon l'une quelconque des revendications 1 à 4, **caractérisé en ce que** ledit couvercle (7) est configuré de façon à ne pas être soumis, par l'effet dudit rayonnement à fréquence radioélectrique, à un chauffage diélectrique supérieur à celui de ladite pâte fermentée (2) contenue dans ledit moule (3).

6. Procédé selon la revendication 3, **caractérisé en ce que** ladite étape de séchage est effectuée après avoir précédemment retiré ledit couvercle (7) desdits moules (3), de façon à ce que lesdits moules (3) aient une surface supérieure ouverte, et après ladite étape de séchage, une étape de retrait de moule est effectuée, comprenant une opération de retournement du moule (3) et une opération de soufflage d'air entre ledit pain cuit (6) et ledit moule (3) le contenant, de façon à ce que lue pain cuit (6) contenu dans ledit moule tombe par gravité et repose sur une surface (9), sur sa face qui était sur la face ouverte supérieure dudit moule (3), ledit pain cuit (6) restant dans cette position de repos pendant une étape de refroidissement à suivre.

7. Procédé selon la revendication 1, dans lequel après l'étape de cuisson dans ledit four à fréquence radioélectrique (4), une étape de retrait de moule est effectuée, dans laquelle lesdits pains cuits (6) sont retirés desdits moules (3), et une étape de refroidissement desdits pains cuits (6) est effectuée, **caractérisé en ce que** ladite étape de refroidissement est effectuée dans une chambre de refroidissement (10) équipée de moyens d'isolation contre la contamination microbienne extérieure, et après ladite étape de refroidissement, un certain nombre d'étapes finales de conditionnement sont effectuées, comprenant une étape de tranchage, dans laquelle lesdits pains cuits (6) retirés de lieur moule sont découpés en tranches, est une étape d'emballage, dans laquelle lesdites tranches sont emballées dans un emballage, lesdites étapes finales de conditionnement étant effectuées dans une zone propre (11) équipée de moyens de protection contre la contamination microbienne extérieure et de moyens de protection actifs contre la croissance bactérienne.

8. Procédé selon la revendication 7, **caractérisé en ce qu'**entre ladite chambre de refroidissement (10) et ladite zone propre (11), lesdits pains cuits (6) retirés de leur moule passent dans un tunnel (12) également équipé de moyens d'isolation contre la contamination microbienne extérieure.

9. Procédé selon l'une quelconque des revendications 1 à 8, où la cuisson desdites unités de pâte en moule (1) par chauffage diélectrique dans un four à fréquence radioélectrique (4) est effectuée en faisant circuler lesdites unités de pâte en moule (1) entre des électrodes inférieures (14) et des électrodes supérieures (15, 15') reliées à une source de tension oscillante, de façon à ce que lesdites électrodes (14, 15, 15') génèrent un champ électrique oscillant qui produit ledit rayonnement à fréquence radioélectrique, **caractérisé en ce que** la partie supérieure desdites unités de pâte en moule (1) passe à travers un champ électrique horizontal (20) généré par des électrodes supérieures (15, 15') entre elles, ledit champ électrique horizontal (20) étant superposé à un champ électrique (21) généré entre elles par les pairles d'électrodes constituées par une électrode supérieure (15, 15') et une électrode inférieure (14).

10. Procédé selon la revendication 9, **caractérisé en ce que** lesdites électrodes supérieures (15, 15') sont disposées en alternance avec des signes opposés et lesdites électrodes inférieures (14) sont disposées en correspondance avec les électrodes supérieures (15, 15") du même signe.

11. Procédé selon la revendication 10, **caractérisé en ce que** les électrodes inférieures (14) ont le même signe et chaque électrode inférieure (14) est disposée sous une électrode supérieure (15, 15') du même signe et alignée verticalement avec celle-ci, de façon à ce qu'entre chaque paire d'électrodes supérieures (15, 15') de signes opposés, un champ électrique horizontal (20) soit créé, tandis qu'entre chaque paire d'électrodes supérieures (15, 15') et inférieures (14) de signes opposés, un champ électrique oblique (21) soit créé.

12. Procédé selon l'une quelconque des revendications 1 à 11, où la cuisson desdites unités de pâte en moule (1) pair chauffage diélectrique dans un four à fréquence radioélectrique (4) est effectuée en faisant circuler lesdites unités de pâte en moule (1) entre des électrodes inférieures (14) et des électrodes supérieures (15, 15') reliées à une source de tension oscillante, de façon à ce que lesdites électrodes (14, 15, 15') génèrent un champ électrique oscillant qui produit ledit rayonnement à fréquence radioélectrique, lesdites électrodes inférieures (14) et supérieures (15, 15') étant configurées en forme de barres qui s'étendent transversalement par rapport à la direction d'avance desdites unités de pâte en moule (1), **caractérisé en ce qu'**au moins certaines (15') desdites électrodes supérieures possèdent une légère courbure orientée de façon à ce que la zone centrale (1) desdites électrodes supérieures incurvées (15) soit plus éloignée desdites unités de pâte en moule (1).

13. Procédé selon la revendication 12, **caractérisé en ce que** lesdites électrodes supérieures incurvées (15') sont placées uniquement dans une zone intermédiaire dudit four à fréquence radioélectrique (4), par rapport, à la direction d'avance desdites unités de pâte en moule (1), les électrodes supérieures dans les autres zones étant des électrodes (15) sans courbure, ladite zone intermédiaire correspondant à une zone où la température au coeur de la pâte fermentée (2) contenue dans lesdites unités de pâte en moule (1) atteint la valeur de 70 °C.
